(19) Europäisches Patentamt
European Patent Office
Office européen des brevets

(11) **EP 3 415 246 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
***B21B 35/12*** *(2006.01)*

(21) Anmeldenummer: **18175885.5**

(22) Anmeldetag: **05.06.2018**

(54) **VERFAHREN ZUM ERMITTELN DER WIRKSAMEN AUSGANGSDREHMOMENTE EINES VERTEILERGETRIEBES**

METHOD FOR DETERMINING THE EFFECTIVE OUTPUT TORQUE OF A TRANSFER BOX

PROCÉDÉ DE DÉTERMINATION DES COUPLES DE SORTIE EFFICACES D'UNE BOÎTE DE TRANSFERT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2017   DE 102017209864**
**21.11.2017   DE 102017220743**

(43) Veröffentlichungstag der Anmeldung:
**19.12.2018   Patentblatt 2018/51**

(73) Patentinhaber: **SMS Group GmbH**
**40237 Düsseldorf (DE)**

(72) Erfinder:
• **Lazzaro, Klaus**
**57399 Kirchhundem (DE)**
• **Steinseifer, Jan**
**57271 Hilchenbach (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
DE-A1- 2 848 644    US-A- 3 134 279
US-A- 3 881 347

EP 3 415 246 B1

**Beschreibung**

Die Erfindung betrifft ein Verfahren zum Ermitteln der wirksamen Ausgangsdrehmomente bei mindestens zwei Abtrieben eines Verteilergetriebes. Darüber hinaus betrifft die Erfindung ein Verfahren zum Betreiben eines Walzgerüstes mit zwei Arbeitswalzen.

Die Arbeitswalzen in Walzwerken werden häufig über Verteilergetriebe, sogenannte Kammwalzengetriebe angetrieben. Mit Hilfe des Verteilergetriebes können mit einem Motor mehrere, üblicherweise zwei Walzen, insbesondere Arbeitswalzen, angetrieben werden. Die wirksamen Ausgangsdrehmomente an den Abtrieben des Verteilergetriebes hängen dabei nicht nur von dem dem Verteilergetriebe zugeführten Eingangsdrehmoment und der Übersetzung innerhalb des Verteilergetriebes ab, sondern sie werden wesentlich auch durch die an den Abtrieben des Verteilergetriebes angekuppelten Lasten bestimmt. Sofern das Verteilergetriebe zum Antrieb von Arbeitswalzen in einem Walzgerüst dient, bildet dieses Walzgerüst, insbesondere wenn es während eines Walzprozesses in Betrieb ist, die Last für die Abtriebe des Verteilergetriebes. Das dem Verteilergetriebe zugeführte Eingangsdrehmoment wird je nach Aufteilung der Lasten - oftmals unerwünschterweise - nicht immer zu gleichen Teilen in die tatsächlich wirksamen Ausgangsdrehmomente der Abtriebe des Verteilergetriebes aufgeteilt. Vielmehr entspricht das Verhältnis der wirksamen Ausgangsdrehmomente an den Abtrieben des Verteilergetriebes zumindest näherungsweise auch dem Verhältnis der Lasten an den Abtrieben des Verteilergetriebes; deshalb wird dieses Verhältnis der wirksamen Ausgangsdrehmomente an den Abtrieben nachfolgend auch als Lastaufteilung bezeichnet.

Eine möglichst genaue Kenntnis der Lastaufteilung ist aus verschiedenen Gründen wünschenswert: Neben der Ermittlung der einwirkenden Belastung auf die Getriebekomponenten sind zudem bei Kenntnis der Lastaufteilung Rückschlüsse auf den Walzprozess möglich. Ein zuverlässiges Signal, welches die genaue Lastaufteilung repräsentiert, kann z. B. in die Automation zur Optimierung eines Walzprozesses, insbesondere der Walzspaltschmierung, eingebunden werden. Große Unterschiede in der Lastaufteilung der Antriebswellen deuten auf unterschiedliche Reibverhältnisse zwischen den Walzen und dem Walzgut hin.

Die Lastverteilung hat einen direkten Einfluss z. B. auf die Wälzlager, die Wellen und Verzahnungsbelastung des Verteilergetriebes. Die Kenntnis der Belastung bzw. Lastaufteilung erlaubt somit Rückschlüsse auf die Zustandsbewertung der Getriebekomponenten.

Bei stark unterschiedlichen Lastaufteilungen können die höher belasteten Teile des Antriebsstrangs überlastet werden. Eine zeitnahe Informationsweitergabe über eine extrem ungünstige Lastverteilung an eine Bedienperson ist daher sinnvoll.

Im Stand der Technik, z. B. gemäß der deutschen Offenlegungsschrift DE 44 08 289 A1 wird die Lastverteilung am Antriebsstrang anhand von Drehmomentmessungen an den rotierenden Ab- bzw. Antriebswellen ermittelt. Nachteilig an dieser bekannten Lösung ist, dass die Messwertaufnahme an rotierenden Teilen durchgeführt wird. Derartige Messungen und die Datenübertragung sind relativ aufwendig und störanfällig.

Diese Nachteile verhindern bisher zum einen, dass z. B. eine dauerhaft funktionstüchtige Lastverteilungsmessung und damit eine lückenlose Zustandsüberwachung der Getriebekomponenten im regulären Walzwerksbetrieb möglich ist. Zum anderen erlaubt die traditionelle Messung der Lastverteilung aufgrund ihrer Störanfälligkeit keine Nutzung dieser gemessenen Lastverteilung für eine zuverlässige Regelung des Walzprozesses, z. B. durch die oben beschriebene Walzspaltschmierung.

Die deutsch Offenlegungsschriften DE 28 48 644 und DE 10 2010 035 535 A1 offenbaren die Bestimmung von Drehmomenten an Getrieben für Kraftfahrzeuge auf Basis der Verformung des Getriebegehäuses.

Die US-Patentanmeldung US 3 134 279 A, welche die Basis für den Oberbegriff von Anspruch 1 bildet, offenbart die Verwendung von Ausgangsdrehmomenten an den Antrieben eines Verteilergetriebes zum Optimieren eines Walzprozesses.

Der Erfindung liegt die Aufgabe zugrunde, ein bekanntes Verfahren zum Ermitteln der wirksamen Ausgangsdrehmomente bei mindestens zwei Abtrieben eines Verteilergetriebes sowie ein bekanntes Verfahren zum Betreiben eines Walzgerüsts dahingehend weiterzubilden, dass sie eine stabilere, wartungsfreundlichere und preisgünstigere Ermittlung der wirksamen Ausgangsdrehmomente bei einem Verteilergetriebe ermöglichen.

Diese Aufgabe wird durch das in Patentanspruch 1 beanspruchte Verfahren gelöst. Demnach sieht das Verfahren folgende Schrittabfolge vor:
Ermitteln der Verformung des Gehäuses des Verteilergetriebes, Ermitteln des wirksamen Ausgangsdrehmomentes des ersten Abtriebs mit Hilfe eines vorbekannten funktionalen Zusammenhangs auf Basis der ermittelten Verformung des Gehäuses und Ermitteln des wirksamen Ausgangsdrehmomentes des zweiten Abtriebs als Differenz zwischen dem dem Verteilergetriebe zugeführten Eingangsdrehmoment und dem wirksamen Ausgangsdrehmoment des ersten Abtriebs.

Der Begriff "wirksames" Ausgangsdrehmoment meint das tatsächlich, insbesondere unter Belastung, an einem der Abtriebe des Verteilergetriebes anstehende Ausgangsdrehmoment. Aufgrund der Lasteinwirkung, beispielsweise eines Walzprozesses und aufgrund sonstiger Störeinflüsse oder Verluste entspricht dieses wirksame Ausgangsdrehmoment nicht dem theoretischen Ausgangsdrehmoment des Motors unter alleiniger Berücksichtigung der theoretischen Übersetzungsverhältnisses des Verteilergetriebes.

Der Begriff "Getriebegehäuse" schließt im Rahmen der vorliegenden Beschreibung auch Lagerstellen der jeweiligen Getriebe mit ein. Insofern kann der Begriff "Verformung eines Gehäuses" auch die Verformung einer Lagerstelle für Wellen oder Abtriebe innerhalb des Verteilergetriebes meinen.

Bei dem Verteilergetriebe, auf welches sich die Erfindung bezieht, wird vorausgesetzt, dass eine durchgehende Welle existiert, welche durch das Verteilergetriebe hindurchgeleitet ist. Sie bildet den Eingang des Verteilergetriebes und den zweiten Abtrieb. Auf der Eingangsseite wird dem Verteilergetriebe an der besagten durchgehenden Welle ein Eingangsdrehmoment zugeführt. Ein Anteil dieses Eingangsdrehmomentes wird durch die durchgehende Welle geleitet und steht als wirksames Ausgangsdrehmoment des zweiten Abtriebs am Ausgang des Verteilergetriebes zur Verfügung.

Der verbleibende Teil des Eingangsdrehmomentes steht - abgesehen von Verlusten - an dem ersten Abtrieb als dort wirksames Ausgangsdrehmoment zur Verfügung. Dieses Ausgangsdrehmoment des ersten Abtriebs wird durch die Verzahnung innerhalb des Verteilergetriebes von der durchgehenden Welle abgeleitet. Lediglich dieser Drehmomentanteil, welcher über die Verzahnung läuft, ruft Reaktionskräfte (Abstützwirkung) in dem Gehäuse des Verteilergetriebes hervor, die ihrerseits wiederum messbare Verformungen des Gehäuses des Verteilergetriebes hervorrufen. Die vorliegende Erfindung nutzt diese Verformung des Gehäuses des Verteilergetriebes, um daraus das über die Verzahnung gelaufene wirksame Ausgangsdrehmoment des ersten Abtriebs zu berechnen.

Die Berechnung erfolgt erfindungsgemäß unter Zugrundelegung eines vorbekannten funktionalen Zusammenhangs zwischen der Verformung des Verteilergetriebegehäuses und dem wirksamen Ausgangsdrehmoment an dem Abtrieb, hier beispielhaft dem ersten Abtrieb, welcher über die Verzahnung aus der durchlaufenden Welle abgeleitet wird. Anders ausgedrückt: Der vorbekannte funktionale Zusammenhang ermöglicht die Berechnung des wirksamen Ausgangsdrehmomentes an dem ersten Abtrieb in Abhängigkeit der ermittelten Verformung des Gehäuses des Verteilergetriebes.

Im Unterschied zu dem über die Verzahnung laufenden zweiten Abtrieb verursacht der erste Abtrieb, d. h. die durchgehende Welle, keine Reaktionskräfte auf das Gehäuse des Verteilergetriebes und somit auch keine Verformung desselben. Das an dem zweiten Abtrieb wirksame Ausgangsdrehmoment kann daher nicht aus einer direkten Messung der Verformung des Gehäuses des Verteilergetriebes ermittelt werden. Das wirksame Ausgangsdrehmoment an dem zweiten Abtrieb kann stattdessen lediglich unter Kenntnis des dem Verteilergetriebes zugeführten Eingangsdrehmomentes durch einfache Differenzbildung bestimmt werden, wie dies in dem Patentanspruch 1 beansprucht ist.

Die auf diese Weise erfindungsgemäß ermittelten wirksamen Ausgangsdrehmomente an dem ersten und zweiten Abtrieb des Verteilergetriebes sind wesentlich präziser ermittelt, als dies bei der aus dem Stand der Technik bekannten Drehmomentmessung an rotierenden An- und Abtriebswellen möglich wäre. Die beanspruchte Vorgehensweise zur Ermittlung der wirksamen Ausgangsdrehmomente an den Abtrieben ist darüber hinaus stabiler, wartungsfreundlicher und preisgünstiger als die Verfahren im Stand der Technik.

Gemäß einem ersten Ausführungsbeispiel ist das Verteilergetriebe Teil eines Antriebsstranges, bei dem dem Verteilergetriebe ein Übersetzungsgetriebe vorgeschaltet ist. Für die vorliegende Erfindung wird dabei die Annahme getroffen, dass das Ausgangsdrehmoment des Übersetzungsgetriebes dem Eingangsdrehmoment des Verteilergetriebes entspricht. Das Ausgangsdrehmoment des Übersetzungsgetriebes kann an der rotierenden Ausgangswelle gemessen werden. Alternativ sieht die vorliegende Erfindung jedoch vorzugsweise vor, das wirksame Ausgangsdrehmoment des Übersetzungsgetriebes anhand der Verformung des Gehäuses des Übersetzungsgetriebes zu ermitteln. Konkret geschieht dies erfindungsgemäß mit Hilfe eines weiteren vorbekannten funktionalen Zusammenhangs, welcher das wirksame Ausgangsdrehmoment des Übersetzungsgetriebes zu einer Verformung des Gehäuses des Übersetzungsgetriebes in Beziehung setzt. Wenn dieser weitere funktionale Zusammenhang vorbekannt ist, sieht die Erfindung vor, dass dann das wirksame Ausgangsdrehmoment des Übersetzungsgetriebes mit Hilfe dieses weiteren funktionalen Zusammenhangs in Abhängigkeit der zuvor ermittelten Verformung des Gehäuses des Übersetzungsgetriebes ermittelt wird.

Wie gesagt, das so ermittelte wirksame Ausgangsdrehmoment des Übersetzungsgetriebes wird dann für die beanspruchte Berechnung des wirksamen Ausgangsdrehmomentes an dem zweiten Abtrieb des Verteilergetriebes als Eingangsdrehmoment für das Verteilergetriebe angenommen.

Unter der Voraussetzung, dass dem Verteilergetriebe als Teil eines Antriebsstrangs ein Motor vorgeschaltet ist - optional mit zwischengeschaltetem Übersetzungsgetriebe - kann vereinfachend auch das von dem Motor abgegebene Drehmoment als Eingangsdrehmoment für das Verteilergetriebe angesetzt werden. Das von dem Motor abgegebene Motordrehmoment berechnet sich bei einem Elektromotor typischerweise aus der dem Motor zugeführten elektrischen Spannung und dem von dem Motor aufgenommenen Strom. Das Motordrehmoment kann insofern alternativ als Eingangsdrehmoment des Verteilergetriebes für die Berechnung des wirksamen Ausgangsdrehmomentes an dem zweiten Abtrieb des Verteilergetriebes verwendet werden.

Der oben erwähnte funktionale Zusammenhang zwischen der Verformung des Gehäuses des Verteilergetriebes und dem wirksamen Ausgangsdrehmoment des ersten Abtriebs und/oder der weitere funktionale Zusammenhang zwischen der Verformung des Gehäuses des Übersetzungsgetriebes und dessen wirksamen Ausgangsdrehmoment wird bzw. werden vorteilhafterweise jeweils mit Hilfe einer mathematisch-physikalischen Modellbildung, beispielsweise mit Hilfe eines Finite-Elemente-Modells ermittelt. Konkret wird bei dieser Modellbildung die Verformung des Gehäuses des jeweiligen Getriebes in Abhängigkeit verschiedener Lasten an dem Abtrieb oder den Abtrieben des jeweiligen Getriebes simuliert. Die so ermittelten funktionalen Zusammenhänge werden dann typischerweise in Form von mindestens einer Kennlinie oder eines Kennlinienfeldes hinterlegt und für die erfindungsgemäße Berechnung der wirksamen Ausgangsdrehmomente an den Getrieben bereitgestellt.

Bei der Durchführung des erfindungsgemäßen Verfahrens wird die Verformung der Gehäuse bzw. der Lagerstellen, beispielsweise mit Hilfe von Dehnmessstreifen ermittelt.

Die oben genannte Aufgabe der Erfindung wird weiterhin durch ein Verfahren zum Betreiben eines Walzgerüstes mit zwei Arbeitswalzen zum Walzen von Walzgut gelöst. Dieses Verfahren sieht vor, dass eine Ist-Verteilung zwischen den wirksamen Ausgangsdrehmomenten der beiden Abtriebe am Ausgang des Verteilergetriebes auf eine vorgegebene Soll-Verteilung geregelt wird durch Zuführen einer geeigneten Menge eines Schmiermittels in die Walzspalte zwischen den Arbeitswalzen und dem Walzgut. Erfindungsgemäß wird dabei die Ist-Verteilung durch das erfindungsgemäße Verfahren ermittelt. Die Vorteile dieser Lösung der Aufgabe entsprechen den oben mit Bezug auf das beanspruchte Verfahren genannten Vorteilen.

Weitere Ausführungsbeispiele sind Gegenstand der abhängigen Ansprüche.

Der Beschreibung sind zwei Figuren beigefügt, wobei

Figur 1    das erfindungsgemäße Verfahren; und

Figur 2    eine Detailansicht eines Verteilergetriebes

veranschaulicht.

Die Erfindung wird nachfolgend unter Bezugnahme auf die genannten Figuren in Form von Ausführungsbeispielen detailliert beschrieben. In beiden Figuren sind gleiche technische Elemente mit gleichen Bezugszeichen bezeichnet.

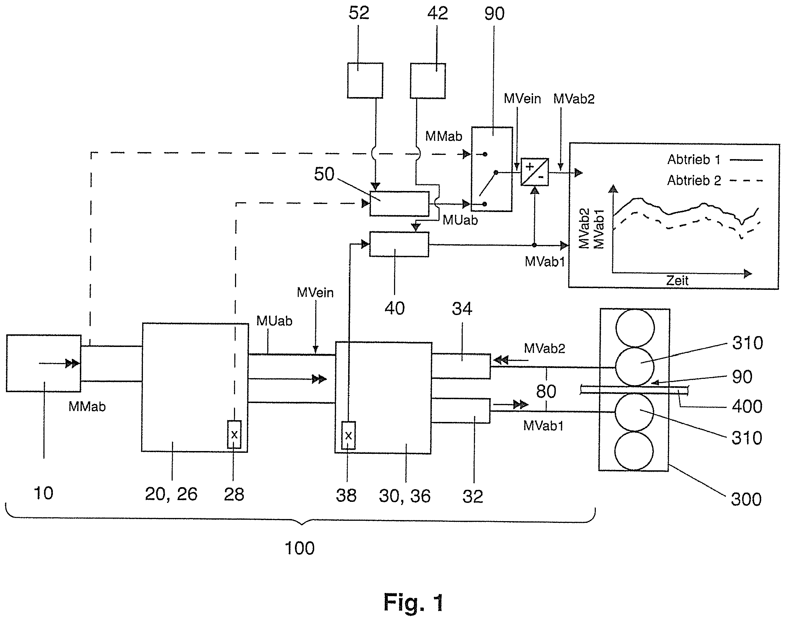

Figur 1 zeigt im unteren Bereich einen Antriebsstrang 100. Dieser umfasst einen Motor 10, welchem ein Übersetzungsgetriebe 20 und ein Verteilergetriebe 30, auch Kammwalzgetriebe genannt, nachgeschaltet sind. Der Motor 10 und das Übersetzungsgetriebe 20 sowie das Übersetzungsgetriebe und das Verteilergetriebe 30 sind jeweils über Wellen miteinander gekoppelt. So wird vereinfachend angenommen, dass das Ausgangsdrehmoment MMab des Motors als Eingangsdrehmoment in das Übersetzungsgetriebe 20 übertragen wird. Weiterhin wird das wirksame Ausgangsdrehmoment MUab des Übersetzungsgetriebes 20 zumindest näherungsweise als Eingangsdrehmoment MVein dem Verteilergetriebe 30 zugeführt. Das Verteilergetriebe hat an seinem Ausgang einen ersten Abtrieb 32 und einen zweiten Abtrieb 34.

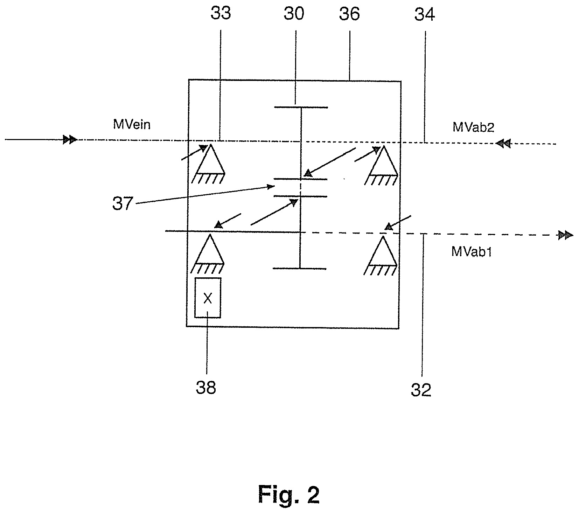

Figur 2 zeigt eine Detailansicht eines Verteilergetriebes 30, wie es der Erfindung zugrunde liegt. Zu erkennen ist insbesondere eine Welle 33, welche durch das Verteilergetriebe 30 hindurchgeführt ist. An ihrem eingangsseitigen Ende liegt das Eingangsdrehmoment MVein für das Verteilergetriebe 30 an, welches entweder von dem Motor 10 oder dem Übersetzungsgetriebe 20 bereitgestellt wird. Nur ein Teil dieses Eingangsdrehmomentes wird durch die Welle 33 geleitet und steht sodann als wirksames Ausgangsdrehmoment MVab2 an dem zweiten Abtrieb 34 am Ausgang des Verteilergetriebes 30 zur Verfügung. Ein anderer komplementärer Teil des Eingangsdrehmomentes, nämlich das wirksame Ausgangsdrehmoment MVab1 steht an dem ersten Abtrieb 32, welcher über die Verzahnung 37 des Verteilergetriebes von der durchgehenden Welle 33 abgeleitet wird, zur Verfügung. Die Verzahnungskraft im Inneren des Verteilergetriebes 30 ist proportional zu dem wirksamen Ausgangsdrehmoment MVab1 des ersten Abtriebs 32. Die Verzahnungskräfte ihrerseits bewirken Reaktionskräfte auf die Lagerstellen bzw. das Gehäuse 36 des Verteilergetriebes 30. Nur diese Kräfte bewirken die für die Erfindung wichtigen Verformungen der Lagerstellen bzw. des Getriebegehäuses. Insofern sind die Verformungen des Gehäuses bzw. der Lagerstellen proportional zu den auf das Lager bzw. das Gehäuse ausgeübten Kräften und diese sind wiederum proportional zu der Verzahnungskraft innerhalb des Verteilergetriebes 30. Aufgrund dieser Wirkungskette gilt schließlich die für die Erfindung wichtige Proportionalität zwischen der Verformung der Lagerstellen bzw. des Gehäuses des Verteilergetriebes und dem wirksamen Ausgangsdrehmoment an dem ersten Abtrieb. Dieser erkannte proportionale Zusammenhang zwischen Verformung des Gehäuses bzw. der Lagerstellen und dem wirksamen Ausgangsdrehmoment gilt gleichermaßen auch für das Übersetzungsgetriebe 20.

Die Abtriebe 32, 34 sind typischerweise mit Lasten beaufschlagt. Gemäß Figur 1 kann der Antriebsstrang 100 beispielsweise zum Betrieb eines Walzgerüstes 300 zum Walzen von Walzgut 400 verwendet werden. Konkret ist dann typischerweise jeder der beiden Abtriebe 32, 34 über eine Spindel 80 mit einer der Arbeitswalzen 310 des Walzgerüstes 300 drehgekoppelt. Die Spindeln 80 gehören in diesem Fall ebenfalls noch zum Antriebsstrang. Ein Walzprozess, bei welchem das Walzgut 400 mit Hilfe der Arbeitswalzen 310 umgeformt wird, bildet dann die Last für den ersten und den zweiten Abtrieb 32, 34. Insbesondere aufgrund unterschiedlicher Reibverhältnisse zwischen den Arbeitswalzen und dem Walzgut an dessen Ober- und Unterseite können der erste Abtrieb und der zweite Abtrieb unterschiedlich belastet sein. Es ergibt sich dann eine unsymmetrische Lastverteilung. In Abhängigkeit der jeweiligen Lastverteilung kann sich an dem ersten Abtrieb 32 ein anderes wirksames Ausgangsdrehmoment MVab1 als an dem zweiten Abtrieb 34 einstellen; das dort wirksame Ausgangsdrehmoment hat das Bezugszeichen MVab2.

Zum Ermitteln der wirksamen Ausgangsdrehmoment MVab1 und MVab2 der beiden Abtriebe 32, 34 des Verteilergetriebes 30 sieht das erfindungsgemäße Verfahren folgende Schritte vor:
Zunächst wird die Verformung des Gehäuses 36 des Verteilergetriebes 30 oder die Verformung von Lagerstellen des Verteilergetriebes 30 beispielsweise mit Hilfe von Dehnmessstreifen 38 ermittelt. Mit Hilfe des zuvor ermittelten funktionalen Zusammenhanges 40 zwischen der Verformung des Gehäuses 36 des Verteilerbetriebes 30 bzw. von dessen Lagerstellen und dem wirksamen Ausgangsdrehmoment des MVab1 des ersten Abtriebs 32 des Verteilergetriebes wird dann dieses besagte wirksame Ausgangsdrehmoment MVab1 ermittelt, beispielsweise als Funktion über der Zeit; siehe Figur 1.

Das wirksame Ausgangsdrehmoment MVab2 des weiten Abtriebs 34 wird dann anschließend als Differenz zwischen dem dem Verteilergetriebe 30 zugeführten Eingangsdrehmoment MVein und dem wirksamen Ausgangsdrehmoment MVab1 des ersten Abtriebs 32 berechnet. Für die Ermittlung dieses Eingangsdrehmomentes MVein am Eingang des Verteilergetriebes 30 sieht die vorliegende Erfindung zwei verschiedene alternative Ermittlungsmöglichkeiten vor.

Eine erste Möglichkeit besteht darin, das Motordrehmoment MMab an der Abtriebswelle des Motors 10 zu ermitteln und dem Eingangsdrehmoment MVein des Verteilergetriebes 30 gleichzusetzen. In Figur 1 ist diese Alternative durch das Eingangssignal MMab für den Auswahlschalter 90 dargestellt. Das Motordrehmoment MMab kann beispielsweise über Strom und Spannung des Motors berechnet oder an dessen Welle gemessen werden.

Alternativ dazu kann das Eingangssignal MVein am Eingang des Verteilergetriebes 30 auch als durch das wirksame Ausgangsdrehmoment MUab am Ausgang des Übersetzungsgetriebes 20 repräsentiert angesehen werden. Erfindungsgemäß kann dieses wirksame Ausgangsdrehmoment MUab mit Hilfe eines weiteren vorbekannten funktionalen Zusammenhangs 50 aus einer beispielsweise mit Hilfe eines Dehnmessstreifens 28 gemessenen Verformung des Gehäuses 26 des Übersetzungsgetriebes 20 oder einer mit dem Dehnmessstreifen gemessenen Verformung von Lagerstellen des Übersetzungsgetriebes 20 ermittelt werden. Dieses so ermittelte wirksame Ausgangsdrehmoment MUab geht dann ebenfalls als Eingangssignal in den Auswahlschalter 90 ein. Der Auswahlschalter 90 repräsentiert in Figur 1 die Auswahlmöglichkeit für den Betreiber des erfindungsgemäßen Verfahrens entweder das Motordrehmoment MMab oder das wirksame Ausgangsdrehmoment MUab am Ausgang des Übersetzungsgetriebes 20 als Repräsentanz für das Eingangsdrehmoment MVein am Eingang des Verteilergetriebes 30 auszuwählen. Wie gesagt, aus dem so ermittelten Eingangsdrehmoment am Eingang des Verteilergetriebes 30 und dem zuvor ermittelten wirksamen Ausgangsdrehmoment MVab1 an dem ersten Abtrieb des Verteilergetriebes wird dann durch Differenzbildung das wirksame Ausgangsdrehmoment MVab2 an dem zweiten Abtrieb des Verteilergetriebes berechnet, vorzugsweise als Funktion der Zeit, so wie in Figur 1 dargestellt. Ein Vergleich der wirksamen Ausgangsdrehmomente MVab1 und MVab2 lässt gegebenenfalls auf eine unterschiedliche Belastung der beiden Abtriebe 32 und 34 des Verteilergetriebes 30 rückschließen.

Schließlich sei erwähnt, dass die erfindungsgemäß präzise ermittelte Lastverteilung, repräsentiert durch ein erfindungsgemäß berechnetes Verhältnis r zwischen dem wirksamen Ausgangsdrehmoment MVab1 des ersten Abtriebs 32 und dem wirksamen Ausgangsdrehmoment MVab2 des zweiten Abtriebs 34 sehr gut geeignet ist zur Verwendung im Rahmen einer Regelung eines Walzprozesses. Konkret lässt sich mit dem erfindungsgemäßen Verfahren sehr gut die Ist-Verteilung zwischen den wirksamen Ausgangsdrehmomenten MVab1, MVab2 der beiden Abtriebe 32, 34 am Ausgang des Verteilergetriebes 30 ermitteln und mit Hilfe einer Regelung auf eine vorgegebene Soll-Verteilung regeln. Diese Regelung kann dadurch realisiert werden, dass eine geeignete Menge Schmiermittel als Stellgröße in die Walzspalte zwischen den Arbeitswalzen und dem Walzgut des Walzgerüstes eingebracht wird, um auf diese Weise die Reibverhältnisse in den Walzspalten und damit die Lasten an den Abtrieben geeignet zu beeinflussen, vorzugsweise zu vergleichmäßigen.

Die erfindungsgemäße Ermittlung der Lastverteilung kann während eines Walzprozesses kontinuierlich bzw. dauerhaft ausgeführt werden und ermöglicht somit eine lückenlose Zustandsüberwachung der Getriebekomponenten im regulären Walzwerksbetrieb.

Bezugszeichenliste

| 10 | Motor |
| 20 | Übersetzungsgetriebe |
| 26 | Gehäuse |
| 28 | Dehnmessstreifen |

| | |
|---|---|
| 30 | Verteilergetriebe |
| 32 | erster Abtrieb |
| 33 | Welle |
| 34 | zweiter Abtrieb |
| 36 | Gehäuse |
| 37 | Verzahnung |
| 38 | Dehnmessstreifen |
| 40 | funktionaler Zusammenhang |
| 42 | mathematisch-physikalische Modellbildung |
| 50 | funktionaler Zusammenhang |
| 52 | mathematisch-physikalische Modellbildung |
| 80 | Antriebsspindeln |
| 90 | Schmiermittel |
| 100 | Antriebsstrang |
| 300 | Walzgerüst |
| 310 | Arbeitswalzen |
| 400 | Walzgut |

| | |
|---|---|
| MVab1 | wirksamer Ausgangsdrehmoment |
| MVab2 | wirksamer Ausgangsdrehmoment |
| MVein | Eingangsdrehmoment |
| MVaus | Ausgangsdrehmoment |
| MMab | Motordrehmoment |
| MUab | wirksames Ausgangsdrehmoment |

**Patentansprüche**

1. Verfahren zum Ermitteln der wirksamen Ausgangsdrehmomente (MVab1, MVab2) bei mindestens zwei Abtrieben (32, 34) eines Verteilergetriebes (30), welches von einem Gehäuse (36) umgeben ist, **gekennzeichnet durch** folgende Schritte:

   Ermitteln der Verformung des Gehäuses (36) des Verteilergetriebes (30);
   Ermitteln des wirksamen Ausgangsdrehmomentes (MVab2) des ersten Abtriebs (32) mit Hilfe eines vorbekannten funktionalen Zusammenhangs (40) auf Basis der ermittelten Verformung des Gehäuses; und
   Ermitteln des wirksamen Ausgangsdrehmomentes (MVab2) des zweiten Abtriebs (34) als Differenz zwischen dem dem Verteilergetriebe (30) zugeführten Eingangsdrehmoment (MVEIN) und dem wirksamen Ausgangsdrehmoment (MVab1) des ersten Abtriebs (32).

2. Verfahren nach Anspruch 1,
   **dadurch gekennzeichnet,**
   **dass** das Verteilergetriebe (30) Teil eines Antriebsstranges (100) ist und dass dem Verteilergetriebe (30) in dem Antriebsstrang ein Übersetzungsgetriebe (20) vorgeschaltet ist, so dass das Ausgangsdrehmoment (MUab) des Übersetzungsgetriebes (20) zumindest näherungsweise dem Eingangsdrehmoment (MVein) des Verteilergetriebes (30) entspricht, und
   **dass** das Eingangsdrehmoment (MVein) des Verteilergetriebes (30) ermittelt wird durch folgende Schritte:

   Ermitteln der Verformung des Gehäuses (26) des Übersetzungsgetriebes (20); und
   Ermitteln des wirksamen Ausgangsdrehmomentes (MUab) des Übersetzungsgetriebes (20) als Eingangsdrehmoment (MVein) des Verteilergetriebes (30) mit Hilfe eines weiteren vorbekannten funktionalen Zusammenhangs (50) auf Basis der ermittelten Verformung des Gehäuses (26) des Übersetzungsgetriebes (20).

3. Verfahren nach Anspruch 1,
   **dadurch gekennzeichnet,**
   **dass** das Verteilergetriebe (30) Teil eines Antriebsstranges (100) ist und dass dem Verteilergetriebe (30) in dem Antriebsstrang ein Motor (10) vorgeschaltet ist - und optional zwischen den Motor (10) und das Verteilergetriebe (30) ein Übersetzungsgetriebe (20) geschaltet ist - ; und
   **dass** das von dem Motor (10) abgegebene Motordrehmoment (MMab) das Eingangsdrehmoment (MVein) des Verteilergetriebes (30) berechnet oder gemessen und als Repräsentanz für verwendet wird.

4. Verfahren nach einem der vorangegangenen Ansprüche,
   **dadurch gekennzeichnet,**
   **dass** der funktionale Zusammenhang (40) zwischen der Verformung des Gehäuses (36) des Verteilergetriebes (30) und dem wirksamen Ausgangsdrehmoment (MVab1) des ersten Abtriebs (32) und/oder der weitere funktionale Zusammenhang (50) zwischen der Verformung des Gehäuses (26) des Übersetzungsgetriebes (20) und dessen wirksamen Ausgangsdrehmoment (MUab) jeweils ermittelt wird mit Hilfe einer mathematisch-physikalischen Modellbildung (42, 52), beispielsweise mit Hilfe eines Finite-Elemente-Modells.

5. Verfahren nach einem der vorangegangenen Ansprüche,
   **dadurch gekennzeichnet,**
   **dass** der funktionale Zusammenhang (40) und/oder der weitere funktionale Zusammenhang (50) jeweils in Form von mindestens einer Kennlinie oder eines Kennlinienfeldes hinterlegt und bereitgestellt wird.

6. Verfahren nach einem der vorangegangenen Ansprüche,
   **dadurch gekennzeichnet,**
   **dass** die Verformung des Gehäuses (36) des Verteilergetriebes (30) und/oder die Verformung des Gehäuses (26) des Übersetzungsgetriebes (20) mit Hilfe von mindestens einem an dem Gehäuse (36, 26) angebrachten Dehnmessstreifen (38, 28) gemessen wird.

7. Verfahren nach einem der vorangegangenen Ansprüche,
   **dadurch gekennzeichnet,**
   **dass** das Eingangsdrehmoment (MVein) des Verteilergetriebes (30) über die Verzahnung (37) des Verteilergetriebes in das wirksame Ausgangsdrehmoment (MVab1) des ersten Abtriebs (32) des Verteilergetriebes übertragen bzw. umgewandelt wird.

8. Verfahren nach einem der vorangegangenen Ansprüche,
   **dadurch gekennzeichnet,**
   **dass** die Ist-Verteilung r der wirksamen Ausgangsdrehmomente an den beiden Abtrieben (32, 34) als Lastverteilung am Ausgang des Verteilergetriebes berechnet wird wie folgt:

$$r = \frac{wirksames\,Ausgangsdrehmoment\,(MVab1)\,des\,ersten\,Antriebs\,(32)}{wirksames\,Ausgangsdrehmoment\,(MVab2)\,des\,zweiten\,Antriebs\,(34)}$$

9. Verfahren zum Betreiben eines Walzgerüstes (300) mit zwei Arbeitswalzen (310) zum Walzen von Walzgut (400) und mit einem Antriebsstrang (100) zum Antreiben der beiden Arbeitswalzen, wobei der Antriebsstrang zumindest einen Motor (10) und ein dem Motor nachgeschaltetes Verteilergetriebe (30) mit zwei Abtrieben (32, 34) aufweist zum Antreiben der beiden Arbeitswalzen (310) über Antriebsspindeln (80); wobei das Verfahren folgende Schritte aufweist:

   Regeln der Ist-Verteilung r zwischen den wirksamen Ausgangsdrehmomenten (MVab1, MVab2) der beiden Abtriebe (32, 34) am Ausgang des Verteilergetriebes (30) auf eine vorgegebene Soll-Verteilung durch Zuführen einer geeigneten Menge eines Schmiermittels (90) in die Walzspalte zwischen den Arbeitswalzen und dem Walzgut;
   **dadurch gekennzeichnet,**
   **dass** die Ist-Verteilung ermittelt wird mit dem Verfahren nach Anspruch 8.

**Claims**

1. Method of determining the effective output torque (MVab1, MVab2) at at least two output drives (32, 34) of a power divider transmission (30) which is enclosed by a casing (36), **characterised by** the following steps:

   determining the deformation of the casing (36) of the power divider transmission (30);
   determining the effective output torque (MVab1) of the first output drive (32) with the help of a known functional correlationship (40) on the basis of the determined deformation of the casing; and

determining the effective output torque (MVab2) of the second output drive (34) as a difference between the input torque (MVein) supplied to the power divider transmission (30) and the effective output torque (MVab1) of the first output drive (32).

2. Method according to claim 1,
**characterised in that**
the power divider transmission (30) is a part of a drive train (100) and a speed-change transmission (20) is connected upstream of the power divider transmission (30) in the drive train so that the output torque (MUab) of the speed-change transmission (20) at least approximately corresponds with the input torque (MVein) of the power divider transmission (30), and
the input torque (MVein) of the power divider transmission (30) is determined by the following steps:

determining the deformation of the casting (26) of the speed-change transmission (20); and
determining the effective output torque (MUab) of the speed-change transmission (20) as input torque (MVein) of the power divider transmission (30) with the help of a further known functional correlationship (50) on the basis of the determined deformation of the casing (26) of the speed-change transmission (20).

3. Method according to claim 1,
**characterised in that**
the power divider transmission (30) is part of a drive train (100) and a motor (10) is connected upstream of the power divider transmission (30) in the drive train and a speed-change transmission (20) is optionally connected between the motor (10) and the power divider transmission (30); and
the input torque (MVein) of the power divider transmission (30) is calculated or measured from and used as a representative for the motor torque (MMab) delivered by the motor (10).

4. Method according to any one of the preceding claims,
**characterised in that**
the functional correlationship (40) between the deformation of the casing (36) of the power divider transmission (30) and the effective output torque (MVab1) of the first output drive (32) and/or the further functional correlationship (50) between the deformation of the casing (26) of the speed-change transmission (20) and the effective output torque (MUab) thereof is or are respectively determined with the help of a mathematical/physical model formation (42, 52), for example with the help of a finite element model.

5. Method according to any one of the preceding claims,
**characterised in that**
the functional correlationship (40) and/or the further functional correlationship (50) is or are respectively filed and prepared in the form of at least one characteristic curve or characteristic curve field.

6. Method according to any one of the preceding claims,
**characterised in that**
the deformation of the casing (36) of the power divider transmission (30) and/or the deformation of the casing (26) of the speed-change transmission (20) is or are measured with the help of at least one strain gauge (38, 28) mounted at the casing (36, 26).

7. Method according to any one of the preceding claims,
**characterised in that**
the input torque (MVein) of the power divider transmission (30) is transferred or converted by way of the toothing (37) of the power divider transmission into the effective output torque (MVab1) of the first output drive (32) of the power divider transmission.

8. Method according to any one of the preceding claims,
**characterised in that**
the actual power division r of the effective output torques at the two output drives (32, 34) is calculated as a load distribution at the output of the power divider transmission as follows:

$$r = \frac{effective\ output\ torque\ (MVab1)\ of\ the\ first\ drive\ (32)}{effective\ output\ torque\ (MVab2)\ of\ the\ second\ drive\ (34)}$$

**9.** Method of operating a roll stand (300) with two work rolls (310) for the rolling of rolling material (400) and with a drive train (100) for driving the two work rolls, wherein the drive train comprises at least one motor (10) and a power divider transmission (30), which is downstream of the motor, with two output drives (32, 34) for drive of the two work rolls (310) by way of drive spindles (80), wherein the method comprises the following steps:

regulating the actual power division r between the effective output torques (MVab1, MVab2) of the two output drives (32, 34) at the output of the power divider transmission (30) to a predetermined target power division by feed of a suitable quantity of a lubricant (90) to the rolling gaps between the work rolls and the rolling material, **characterised in that**
the actual power division is determined by the method according to claim 8.

**Revendications**

**1.** Procédé destiné à la détermination des couples de rotation de sortie effectifs (MVab1, MVab2) dans le contexte d'au moins deux commandes (32, 34) d'une boîte de transfert (30) qui est entourée par un logement (36), **caractérisé par** les étapes suivantes dans lesquelles :

on détermine la déformation du logement (36) de la boîte de transfert (30) ;
on détermine le couple de rotation de sortie effectif (MVab2) de la première commande (32) en s'aidant d'un rapport fonctionnel (40) connu au préalable, en se basant sur la déformation déterminée du logement ; et
on détermine le couple de rotation de sortie effectif (MVab2) de la deuxième commande (34) sous la forme d'une différence entre le couple de rotation d'entrée (MVein) acheminé à la boîte de transfert (30) et le couple de rotation de sortie effectif (MVab1) de la première commande (32).

**2.** Procédé selon la revendication 1,
**caractérisé**
**en ce que** la boîte de transfert (30) fait partie d'une ligne de transmission (100) et en ce qu'un engrenage multiplicateur (20) est monté en amont de la boîte de transfert (30) dans la ligne de transmission, d'une manière telle que le couple de rotation de sortie (MUab) de l'engrenage multiplicateur (20) corresponde au moins de manière approximative au couple de rotation d'entrée (MVein) de la boîte de transfert (30) ; et
**en ce qu'**on détermine le couple de rotation d'entrée (MVein) de la boîte de transfert (20) en passant par les étapes suivantes dans lesquelles :

on détermine la déformation du logement (26) de l'engrenage multiplicateur (20) ; et
on détermine le couple de rotation de sortie effectif (MUab) de l'engrenage multiplicateur (20) à titre de couple de rotation d'entrée (MVein) de la boîte de transfert (30) en s'aidant d'un rapport fonctionnel supplémentaire (50) connu au préalable, en se basant sur la déformation déterminée du logement (26) de l'engrenage multiplicateur (20).

**3.** Procédé selon la revendication 1,
**caractérisé**
**en ce que** la boîte de transfert (30) fait partie d'une ligne de transmission (100) et en ce qu'un moteur (10) est monté en amont de la boîte de transfert (30) dans la ligne de transmission - et, de manière facultative, un engrenage multiplicateur (20) est monté entre le moteur (10) et la boîte de transfert (30) - ; et
**en ce que** l'on calcule ou l'on mesure le couple de rotation de moteur (MMab) fourni par le moteur (10) et en ce qu'on utilise le couple de rotation de moteur (MMab) fourni par le moteur (10) à titre de représentation pour le couple de rotation d'entrée (MVein) de la boîte de transfert (30).

**4.** Procédé selon l'une quelconque des revendications précédentes,
**caractérisé**
**en ce que** l'on détermine respectivement le rapport fonctionnel (40) entre la déformation du logement (36) de la boîte de transfert (30) et le couple de rotation de sortie effectif (MVab1) de la première commande (32) et/ou le rapport fonctionnel supplémentaire (50) entre la déformation du logement (26) de l'engrenage multiplicateur (20) et le couple de rotation de sortie effectif (MUab) de ce dernier en s'aidant d'une modélisation mathématique-physique (42, 52), par exemple à l'aide d'un modèle d'éléments finis.

**5.** Procédé selon l'une quelconque des revendications précédentes,

**caractérisé**

**en ce que** le rapport fonctionnel (40) et/ou le rapport fonctionnel supplémentaire (50) est/sont déposé(s) et est/sont fourni(s) respectivement sous la forme d'au moins une courbe caractéristique ou d'un diagramme caractéristique.

6.  Procédé selon l'une quelconque des revendications précédentes,
    **caractérisé**
    **en ce que** l'on mesure la déformation du logement (36) de la boîte de transfert (30) et/ou la déformation du logement (26) de l'engrenage multiplicateur (20) en s'aidant d'au moins une jauge de contrainte (38, 28) qui est appliquée contre le logement (36, 26).

7.  Procédé selon l'une quelconque des revendications précédentes,
    **caractérisé**
    **en ce que** le couple de rotation d'entrée (MVein) de la boîte de transfert (30) est transmis et/ou transformé par l'intermédiaire de la denture (37) de la boîte de transfert pour obtenir le couple de rotation de sortie effectif (MVab1) de la première commande (32) de la boîte de transfert.

8.  Procédé selon l'une quelconque des revendications précédentes,
    **caractérisé**
    **en ce que** la distribution réelle r des couples de rotation de sortie effectifs aux deux commandes (32 34) est calculée sous la forme d'une répartition de charge à la sortie de la boîte de transfert, comme indiqué ci-après :

    $$r = \frac{couple\ de\ rotation\ effectif\ de\ sortie\ (MVab1)\ de\ la\ première\ commande\ (32)}{couple\ de\ rotation\ effectif\ de\ sortie\ (MVab2)\ de\ la\ deuxième\ commande\ (34)}$$

9.  Procédé destiné à l'exploitation d'une cage de laminoir (300) comprenant deux cylindres de travail (310) pour le laminage d'un produit de laminage (400) et comprenant une chaîne cinématique de travail (100) pour la commande des deux cylindres de travail ; dans lequel la chaîne cinématique présente au moins un moteur (10) et une boîte de transfert (30) comprenant deux commandes (32, 34), qui est montée en aval par rapport au moteur, à des fins de commande des deux cylindres de travail (310) par l'intermédiaire d'arbres d'entraînement (80) ; dans lequel le procédé présente les étapes suivantes dans lesquelles :

    on règle la distribution réelle r entre les couples de rotation de sortie effectifs (MVab1, MVab2) des deux commandes (32,34) à la sortie de la boîte de transfert (30) pour obtenir une distribution de consigne prédéfinie par l'intermédiaire d'une alimentation d'une quantité appropriée d'un agent lubrifiant (90) dans l'écartement qui est ménagé entre les cylindres de travail et le produit de laminage ;
    **caractérisé**
    **en ce qu'**on détermine la distribution réelle par l'intermédiaire du procédé selon la revendication 8.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4408289 A1
- DE 2848644
- DE 102010035535 A1
- US 3134279 A